# FASCICULE DE BREVET EUROPEEN

(11) **EP 2 630 269 B1**
(45) Date de publication et mention de la délivrance du brevet: **20.05.2015**
(21) Numéro de dépôt: 11787726.6
(22) Date de dépôt: 20.10.2011
(51) Int. Cl.: C22C 38/04, C21D 8/02, C21D 9/46

(54) **TOLE D'ACIER LAMINEE A CHAUD OU A FROID, SON PROCEDE DE FABRICATION ET SON UTILISATION DANS L'INDUSTRIE AUTOMOBILE**
WARM- ODER KALTGEWALTES STAHLBLECH, DESSEN HESTELLUNGSVEFAHREN UND DESSEN VERWENDUNG IN DER AUTOMOBILINDUSTRIE
HOT OR COLD ROLLED STEEL SHEET, ITS MANUFACTURING METHOD AND ITS USE IN THE AUTOMOTIVE INDUSTRY

(30) Priorité: 21.10.2010 WO PCT/FR2010/052254
(43) Date de publication de la demande: 28.08.2013
(73) Titulaire: Arcelormittal Investigación y Desarrollo SL, 48910 Sestao, Bizkaia (ES)
(72) Inventeur: SCOTT, Colin, 26190 Saint Thomas-en-Royans (FR); CUGY, Philippe, F-58400 La Charité-sur-Loire (FR)
(74) Mandataire: Blot, Philippe Robert Emile
(86) Numéro de dépôt international: PCT/FR2011/052451
(87) Numéro de publication internationale: WO 2012/052689

(56) Documents cités:
- WO-A1-2007/074994
- WO-A1-2007/075006
- WO-A2-2011/054332

## Description

L'invention concerne la métallurgie, et plus particulièrement les tôles laminées à chaud ou à froid en acier fer-manganèse susceptibles d'être utilisées dans l'industrie automobile.

Des aciers austénitiques Fe-Mn-C sont utilisés dans l'industrie automobile pour la réalisation de pièces de structure à très haute résistance, sous forme notamment de tôles laminées à chaud ou à froid. Ils présentent l'avantage, par rapport aux aciers au carbone utilisés pour ces mêmes usages, d'être plus légers, ce qui permet des économies d'énergie appréciables lors de l'utilisation du véhicule. Cette famille d'aciers est également appelée « aciers TWIP » (TWinning Induced Plasticity). Leur résistance mécanique est élevée (résistance à la traction Rm > 1000 MPa) et leur ductilité considérable (allongement à la rupture A > 50%). Ils ont une excellente formabilité et une grande capacité à absorber l'énergie en cas de chocs. Cela les rend particulièrement adaptés à la fabrication de pièces de sécurité et de structure de véhicules.

Leur teneur en Mn est d'au moins 10%, souvent de l'ordre de 15 à 35%, leur teneur en C peut aller par exemple jusqu'à 1,5%, et d'autres éléments tels que Al, Si, Cu, Ti, W, Mo, Cr, Ni, Nb, V... peuvent être présents en des quantités significatives. Ces teneurs sont données en pourcentages pondéraux, comme le seront toutes les teneurs citées dans la suite du texte.

Les propriétés mécaniques favorables de ces aciers sont dues :
- à leur structure austénitique stable à toutes les températures entre -100 et +1200°C ;
- à leur taux d'écrouissage élevé (n > 0,4) grâce à un fort taux de maclage mécanique.

A température ambiante, l'énergie de défaut d'empilement de ces aciers est suffisamment faible pour mettre en compétition le maclage mécanique et le glissement des dislocations. La densité de macles augmentant avec la déformation, le libre parcours des dislocations chute rapidement. C'est ce mécanisme qui permet d'obtenir les propriétés mécaniques favorables citées plus haut.

Parmi les documents décrivant de telles tôles, on peut citer les suivants.

EP-A-1 067 203 décrit des tôles Fe-Mn fabriquées par coulée directe de bandes minces. Les compositions décrites sont très larges, en particulier la teneur en Al peut aller jusqu'à 6%, la teneur en Cu jusqu'à 5%, la teneur en Si jusqu'à 2,5%, mais les basses teneurs en Si, Al et Cu sont privilégiées. Ces aciers ont des propriétés mécaniques remarquables lorsque leur procédé d'élaboration (coulée en bandes minces avec laminage à chaud éventuel, de préférence en ligne avec la coulée, laminage à froid et recuit de recristallisation) est respecté. Mais la coulée en bandes minces est un procédé difficile à appliquer et peu adapté à une production de masse comme cela serait souhaitable pour les produits destinés à l'automobile.

WO-A-03/025240 décrit des tôles Fe-Mn à haute résistance pour tubes soudés, comportant 10 à 40% de Mn, jusqu'à 2% de C, jusqu'à 5% de Si, jusqu'à 5% d'Al, jusqu'à 5% de Cu. De nombreux autres éléments d'alliage peuvent aussi être présents. Cependant, des teneurs basses en Al (moins de 0,1% et de préférence 0,01% au maximum), Cu (moins de 1%), Si (moins de 1%, de préférence moins de 0,5%) sont préférées, en particulier pour l'Al qui, à des teneurs élevées, risque de former de nitrures, et ainsi de favoriser la formation de fissures lors des transformations à chaud. Des teneurs basses en Si sont aussi privilégiées, car le Si peut promouvoir la formation de martensite lors de la déformation à froid, et est défavorable au décapage et à la soudabilité du matériau.

WO-A-2005/019483 décrit des tôles laminées à chaud en acier Fe-C-Mn à Rm supérieure à 900 MPa et allongement à la rupture élevé (Rm x A% > 45000). La teneur en C est resserrée à 0,5-0,7% et la teneur en Mn à 17-24%. La teneur en Al est maintenue à un très bas niveau, 0,050% au maximum, là encore pour éviter la formation de nitrures d'Al. La présence importante de Si et Cu est possible, mais pas particulièrement souhaitée.

WO-A-2006/056670 décrit des tôles comparables à celles du document précédent, avec des teneurs en C un peu supérieures (0,85-1,05%) et des teneurs en Mn plus resserrées, de 16 à 19%. Leur résistance Rm est supérieure à 1200 MPa et son produit avec A% est supérieur à 65000 MPA.%. Mais ces propriétés élevées ne sont obtenues sur des tôles laminées à chaud qu'au prix d'une absence totale de carbures de fer précipités et d'une taille de grain moyenne de 10 µm au maximum. Un refroidissement rapide après laminage à chaud suivi par un bobinage à basse température (<400°C) sont nécessaires à cet effet. Et si les conditions de composition et de traitement ne sont pas bien respectées, on risque de former de la cémentite dans les zones ségrégées et dans les joints de grains, d'où des propriétés insuffisamment homogènes dans le produit.

WO-A-2006/077301 décrit des tôles en acier Fe-C-Mn laminées à chaud, puis à froid, puis recuites, destinées à résister à la fissuration différée, c'est-à-dire à l'apparition de fissures postérieurement à leur mise en forme. A cet effet, on introduit dans l'acier un ou des éléments qui vont servir de pièges à hydrogène, empêchant cet élément de se concentrer aux joints de grains austénitiques. V, Ti, Nb, Cr et Mo peuvent être utilisés, ensemble ou séparément, à cet effet. Le V est particulièrement efficace. La composition de l'acier et les traitements thermiques sont ajustés pour l'obtention des propriétés mécaniques élevées et la résistance à la fissuration différée désirées, en particulier dans le but d'obtenir des carbures dont la taille moyenne est de 5 à 25 nm et situés majoritairement en position intragranulaire.

WO-A-2008/007192 décrit des tôles comparables à celles du document précédent, qui de plus sont susceptibles d'être revêtues par du Zn ou un alliage de Zn dans des conditions permettant la formation d'une couche riche en Fe et Mn à l'interface métal-revêtement.

WO-A-93/13 233 décrit des tôles Fe-Mn austénitiques à Mn = 15-35%, C = 0-1,5%, de préférence 0-0,7%, Al = 0,1-6%, Si ≤ 0,6%, avec des teneurs en Mn et Al situées simultanément dans un domaine déterminé. Elles présentent une résistance, une formabilité et une soudabilité élevées. Les documents WO-A-95/26423, WO-A-97/24467 décrivent des tôles comparables. D'autres éléments peuvent être présents dans des gammes de teneurs très vastes, par exemple jusqu'à 5% de Cu. WO-A-2007/074994 décrit des aciers comparables (pouvant cependant ne contenir que 5% de Mn) destinés à être galvanisés pour améliorer leur résistance à la corrosion en milieu salin.

WO-A-2008/078962 décrit des tôles Fe-Mn contenant jusqu'à 0,5% seulement de C, et d'autres éléments dont possiblement du Cu jusqu'à 10%. Elles contiennent de l'austénite résiduelle et de la martensite. Elles présentent une bonne endurance, mais leur résistance à la traction, quoique relativement élevée, et leur allongement à la rupture sont cependant inférieurs à ceux des matériaux précédemment décrits.

WO-A-2007/075006 décrit des tôles Fe-Mn laminées à chaud ou à froid, destinées à être revêtues et présentant une bonne qualité de surface. Elles renferment 0,2-1,5% de C, 10-25% de Mn, 0,01-3% d'AI et 0,005-2% de Si.

WO-A-2008/078904 décrit des tôles Fe-Mn laminées à chaud ou à froid à hautes propriétés mécaniques et bonne qualité de surface, contenant 0,2-1,5% de C, 10-25% de Mn, 0,3-3,0% d'AI et pas de Si.

WO-A-2008/078940 décrit des tôles Fe-Mn laminées à chaud ou à froid à hautes propriétés mécaniques et bonne qualité de surface, contenant 0,2-1,5% de C, 10-25% de Mn, 0,3-3,0% d'AI, et au moins un élément parmi Si, Ti et Nb. Elles se signalent par une bonne capacité à absorber les chocs.

Cependant, cette famille d'aciers riches en Mn voire aussi en C, du fait qu'ils peuvent atteindre des niveaux de contrainte et de déformation élevés, présente une sensibilité importante à différentes formes d'endommagement par l'hydrogène, notamment à la corrosion sous contrainte. Les documents que l'on vient de citer, en particulier, ne proposent pas de solution à ce problème.

Le but de l'invention est de procurer aux utlisateurs, notamment aux constructeurs automobiles, des aciers Fe-Mn sous forme de tôles, laminées à chaud ou à froid, et éventuellement électrozinguées, ayant non seulement les propriétés mécaniques élevées désirées, telles qu'une résistance à la traction Rm supérieure ou égale à 850 MPa et un allongement à la rupture supérieur ou égal à 50% sur tôle brute de laminage à chaud ou de recuit, et une grande aptitude à la déformation plastique, mais présentant aussi une résistance élevée à la corrosion sous contrainte aussi bien en milieu aqueux qu'en milieu salin.

A cet effet, l'invention a pour objet une tôle d'acier laminée à chaud ou à froid, caractérisée en ce que sa composition est, en pourcentages pondéraux :
- 0,6% ≤ C ≤ 0,9% ;
- 17% ≤ Mn ≤ 22% ;
- 0,2% ≤ Al ≤ 0,9% ;
- 0,2% ≤ Si ≤ 1,1% ;
- avec 0,85% ≤ Al + Si ≤ 1,9% ;
- 1,2% ≤ Cu ≤1,9% ;
- S ≤ 0,030% ;
- P ≤ 0,080% ;
- N ≤ 0,1% ;
optionnellement
- Nb ≤ 0,25% et, de préférence, compris entre 0,070 et 0,25% ;
- V ≤ 0,5% et, de préférence, compris entre 0,050 et 0,5% ;
- Ti ≤ 0,5%, et, de préférence, compris entre 0,040 et 0,5% ;
- Ni ≤ 2% ;
- traces ≤ Cr ≤ 2%, de préférence ≤ 1% ;
- B ≤ 0,010%, et, de préférence, compris entre 0,0005% et 0,010% ;
le reste étant du fer et des impuretés résultant de l'élaboration.

De préférence, 0,4% ≤ Al ≤ 0,8%.

De préférence, 0,2% ≤ Si ≤ 0,6%.

De préférence, 17% ≤ Mn ≤ 18%.

De préférence, la taille moyenne de ses grains est inférieure ou égale à 5 µm.

De préférence, la fraction surfacique de ses carbures précipités est inférieure ou égale à 1,5%.

Elle peut comporter un revêtement de Zn ou d'alliage de Zn obtenu par électrozingage.

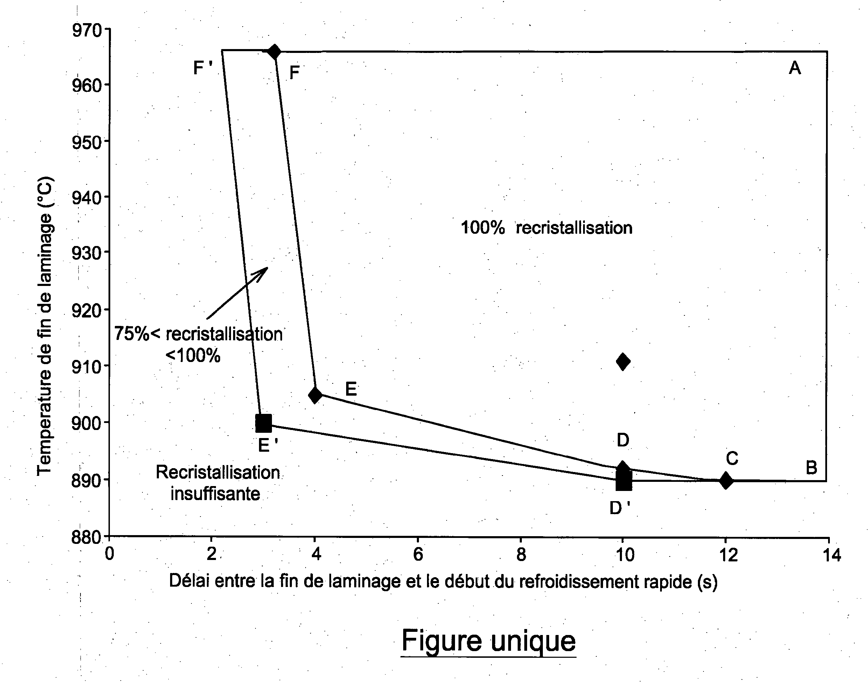

L'invention a également pour objet un procédé de fabrication d'une tôle d'acier, caractérisé en ce que :
- on élabore et coule sous forme d'une brame un demi-produit en un acier ayant la composition précédente ;
- puis on porte ledit demi-produit à une température de 1100 à 1300°C ;
- puis on réalise un laminage à chaud dudit demi-produit pour obtenir une tôle laminée à chaud, la température dudit demi-produit en fin de laminage étant d'au moins 890°C ;
- puis on réalise un refroidissement rapide dudit demi-produit laminé à chaud, à une vitesse d'au moins 40°C/s, en observant un déla i entre la fin du laminage et le début du refroidissement tel que le point défini par ledit délai et ladite température de fin de laminage se trouve situé au sein d'une aire définie par le diagramme ABCD'E'F'A, et préférentiellement ABCDEFA, tel que montrée par la figure 1, le métal subissant un refroidissement naturel à l'air libre pendant ledit délai ;
- puis on bobine ladite tôle laminée à chaud à une température inférieure ou égale à 580°C.

Selon une variante de l'invention, on débobine ladite tôle laminée à chaud bobinée, et on lui applique au moins un cycle de laminage à froid/recuit pour obtenir une tôle laminée à froid.

Après le ou lesdits cycle(s) de laminage à froid/recuit, on peut appliquer à ladite tôle laminée à froid une déformation à froid à un taux de réduction inférieur ou égal à 30%.

Ladite déformation à froid peut être réalisée par un procédé choisi parmi un laminage écrouissant, un planage sous traction en flexion alternée et un étirage simple.

L'invention a également pour objet une utilisation dans l'industrie automobile d'une tôle laminée à chaud ou à froid ayant la composition précédente.

Ladite tôle peut être utilisée dans des conditions susceptibles d'entraîner une corrosion sous contrainte.

Comme on l'aura compris, l'invention consiste à trouver un équilibre entre les teneurs en éléments principaux Fe, Mn, Al et Cu permettant d'assurer à la fois des propriétés mécaniques bien adaptées aux usages habituels des aciers TWIP et une résistance à la corrosion sous contrainte supérieure à celles des aciers de cette famille connus jusqu'à présent. En particulier, il s'avère que les couples Al-Cu et Al-Si présentent une importance particulière pour la résolution de ce problème.

L'invention sera mieux comprise à la lecture de la description qui suit, donnée en référence à la figure 1 qui montre un diagramme présentant l'influence de la température de fin de laminage à chaud et du délai entre la fin du laminage à chaud et le début d'un refroidissement rapide ultérieur sur la fraction recristallisée après bobinage, pour les aciers selon l'invention.

La sensibilité à la corrosion sous contrainte est mesurée par deux méthodes classiques, dites « essais de godets » et «essais de fluage ».

L'essai de godet consiste à partir d'un flan circulaire de, par exemple, 55 mm de diamètre, et à l'emboutir au moyen d'un poinçon de, par exemple, 33 mm de diamètre, pour former un godet, selon des modalités décrites dans WO-A-2006/077301. Dans le cas présent, le facteur β qui détermine la sévérité de l'essai et est déterminé par le rapport entre le diamètre du flan et le diamètre du poinçon est de 1,67. Le godet, qui présente des contraintes internes suite à la déformation du métal, est ensuite plongé dans l'eau pure ou salée, ou dans un brouillard salin selon le milieu dont on veut tester l'influence, et on mesure le nombre de jours au bout duquel des fissures apparaissent.

Pour l'essai de fluage, une éprouvette conventionnelle d'essai de traction est complètement immergée dans un bac contenant de l'eau salée puis soumise à une force de traction constante. On observe au bout de combien de temps apparaissent des fissures dues à la corrosion.

Les aciers selon l'invention doivent posséder des propriétés mécaniques habituelles pour le type d'utilisation visé : résistance à la traction Rm d'au moins 850 MPa et A% d'au moins 50% sur tôle brute de laminage à chaud ou de laminage à froid et de recuit.

Concernant l'aptitude des aciers à supporter la corrosion sous contrainte, les inventeurs ont appliqué le critère suivant qui leur est personnel.

Ils ont mesuré les durées en jours au bout desquelles la première fissure est observée dans un lot de cinq godets trempés dans de l'eau du robinet (durée A), et sur cinq godets soumis à un test de brouillard salin en continu (durée B), ainsi que sur une éprouvette de traction découpée dans une tôle préalablement laminée a froid avec une réduction de 50 % et soumise à une contrainte égale à 80% de la résistance maximum à la traction après 50% de réduction par laminage a froid (durée C).. La contrainte est appliquée sur une éprouvette immergée dans une solution aqueuse de 5% de NaCl.

Puis une grandeur Σ = A + 3xB + 4xC a été calculée. Elle traduit la résistance de l'acier à la corrosion sous contrainte, en pondérant de façon privilégiée l'essai de godet en brouillard salin et l'essai de traction d'une éprouvette en eau salée qui représentent les conditions les plus exigeantes que les pièces fabriquées à partir de l'acier selon l'invention sont susceptibles de rencontrer lors de leur utilisation. Les inventeurs ont considéré qu'une grandeur Σ d'au moins 170 jours devait être atteinte pour que l'acier soit considéré comme satisfaisant, du point de vue de sa résistance à la corrosion sous contrainte.

On considère également qu'il est nécessaire que la durée minimale de résistance à la corrosion des godets soit de 90 jours (essais sous eau) et de 13 jours (essais en brouillard salin). Pour le test de corrosion sous contrainte en eau salée, on considère qu'une durée minimale de résistance à la corrosion de 4 jours doit être observée.

L'expérience montre que les critères de taille des grains et des précipités n'ont qu'une influence relativement minime sur la résistance à la corrosion sous contrainte des aciers selon l'invention, dont la composition est la caractéristique principale. La taille des précipités n'a pas d'effet sur la corrosion sous contrainte, mais seulement sur la fissuration différée. La présence de gros grains pourrait éventuellement être bénéfique pour la corrosion sous contrainte, mais elle empêcherait d'obtenir les propriétés mécaniques souhaitées.

Pour ce qui est du procédé d'élaboration des aciers de l'invention permettant de leur procurer les propriétés mécaniques souhaitées, il peut être fondamentalement identique à ceux qu'il est habituel de pratiquer sur les aciers Fe-Mn connus.

Le procédé décrit dans WO-A-2005/019483, où il est appliqué à des aciers de composition assez comparable à ceux de l'invention, est bien adapté. Il consiste à élaborer et couler sous forme d'une brame un demi-produit en un acier ayant la composition prescrite, puis à le porter à une température de 1100-1300°C, à réaliser sur le demi-produit ainsi chauffé une déformation à chaud par laminage, avec une température finale de 890°C ou davantage, à réalise r un refroidissement rapide du demi-produit laminé par pulvérisation d'eau ou tout autre procédé permettant d'obtenir une vitesse de refroidissement minimale de 40°C/s, en observant un délai entre la fin du laminage et le début du refroidissement soit tel que le point défini par ledit délai et ladite température de fin de laminage se trouve situé au sein d'une aire définie par le diagramme ABCD'E'F'A, et préférentiellement ABCDEFA, tel que montrée par la figure 1. Pendant ledit délai, le métal subit un refroidissement naturel à l'air libre.

La fonction de l'observation de ce délai est de garantir l'obtention d'une recristallisation de l'austénite d'au moins 75% du produit (si on se situe dans l'aire ABCD'E'F'A), voire de 100% du produit (si on se situe dans l'aire ABCDEFA). C'est à cette condition qu'on obtient une structure du produit final garantissant les propriétés mécaniques souhaitées, notamment une grande aptitude à la déformation.

Après le refroidissement, on bobine la tôle à chaud obtenue à 580°C ou à une température plus basse pour éviter la précipitation de carbures de fer.

Typiquement, la tôle laminée à chaud ainsi obtenue a une épaisseur comprise entre 0,5 et 5 mm, dépendant notamment du procédé de coulée employé. Les épaisseurs les plus faibles correspondent en général aux cas où le demi-produit a été coulé par un procédé de coulée continue de brames minces ou de bandes minces directement à partir du métal liquide.

Eventuellement, si on désire obtenir une tôle laminée à froid, on applique à la tôle laminée à chaud après son débobinage un laminage à froid suivi d'un recuit base ou d'un recuit en continu. Les conditions du recuit et du refroidissement qui suit doivent, cependant, éviter la croissance des grains et la précipitation de carbures de fer dans des proportions qui compromettraient l'obtention des propriétés mécaniques visées. Par exemple, un recuit continu effectué à 600-900°C pendant 10 à 500 secondes suivi d'un refroidissement à 0,5°C/s ou davantage est bien adapté à cet effet. On peut aussi effectuer plusieurs tels cycles de laminage à froid/recuit, en particulier lorsque des épaisseurs finales faibles sont désirées pour les tôles laminées à froid.

Après cela, on peut procéder à une nouvelle déformation à froid, à un taux de réduction ne dépassant pas 30%, par exemple un laminage écrouissant (skin-pass), un planage sous traction en flexion alternée, un étirage simple. Cette ultime mise en forme, outre qu'elle peut améliorer la planéité de la bande, permet d'augmenter sa résistance, au prix d'une diminution de sa ductilité. Cette diminution de la ductilité devient excessive si le taux de réduction dépasse 30%.

La tôle laminée à froid obtenue a typiquement une épaisseur de l'ordre de 0,2 mm à quelques mm.

De préférence, le procédé de fabrication doit viser à minimiser la quantité d'hydrogène présente en fin de traitement, de manière à diminuer le risque de fissuration différée, en particulier lorsqu'on pratique un microalliage par addition de V, Ti, Nb, Mo, W ou Cr dans les limites prescrites pour former des carbures, nitrures et/ou carbonitrures adéquats. Comme il est connu dans WO-A-2008/007192, à cet effet on peut conclure le traitement par un recuit effectué sur la bande ayant son épaisseur définitive, ou sur le produit mis en forme, entre 250 et 900°C pendant au moins 15 s. Un recuit base effectué sur la bande bobinée est particulièrement adapté à cet effet.

La tôle peut aussi subir une opération de revêtement par du Zn ou un alliage de Zn, par galvanisation ou électrodéposition, à un moment de l'élaboration conforme à la pratique habituelle, par exemple avant le dernier recuit visant à éliminer l'hydrogène.

On va à présent motiver les teneurs des différents éléments exigées par l'invention.

La teneur en C est comprise entre 0,6 et 0,9% et la teneur en Mn entre 17 et 22%. Ce couple de teneurs permet d'obtenir les microstructures austénitiques stables recherchées, déterminant les propriétés mécaniques de la tôle. En particulier, une formation excessive de carbures de fer est évitée si C ne dépasse pas 0,9%, et la formation de phases martensitiques qui dégraderaient l'aptitude de la tôle à la déformation est évitée ou fortement limitée si Mn dépasse 17%. La limite supérieure de 22% pour Mn s'explique par des raisons liées à la ductilité de la tôle à température ambiante et au coût du matériau.

La teneur en Al est comprise entre 0,2 et 0,9%, de préférence entre 0,4 et 0,8%. L'AI est un élément désoxydant dont l'addition aux aciers Fe-C-Mn est courante dans des proportions très variables pouvant atteindre plusieurs %, mais elle peut aussi se limiter à quelques dizaines de millièmes de % voire moins, comme on le voit dans les documents de l'art antérieur cités en introduction.

On prescrit souvent de limiter sa teneur à 0,050% pour éviter une formation excessive de nitrures, dont le risque est élevé du fait que Mn augmente la solubilité de l'azote dans le Fe. Mais les inventeurs ont constaté que cet inconvénient pouvait être largement contrebalancé par l'avantage procuré, en combinaison avec les teneurs en Cu et Si prescrites par ailleurs, de l'amélioration de la résistance de la tôle à la corrosion sous contrainte.

Pour ne pas former de nitrures en excès, et aussi éviter la formation de porosités (soufflures) par dégagement gazeux lors de la solidification du métal, la teneur en azote doit, simultanément, être limitée à 0,1%.

En plus, l'Al est favorable à l'augmentation de l'énergie de défaut d'empilement, ce qui diminue le risque de former de la martensite de déformation.

Au-delà de 0,9% et compte tenu des teneurs des autres éléments, l'Al a une influence négative sur la corrosion sous contrainte dans l'eau salée. Pour la corrosion en eau pure, l'optimum d'Al se situe à 0,4% environ.

La teneur en Si est comprise entre 0,2 et 1,1%, de préférence entre 0,20 et 0,6%. Le Si est aussi utilisé pour la désoxydation de l'acier (quoique dans le présent cas où les teneurs en Mn et Al sont toujours élevées, son rôle soit mineur de ce point de vue), et aussi pour durcir le métal. La teneur minimale de 0,2% est d'une part celle qui est nécessaire pour que Si commence à faire sentir ses effets sur les caractéristiques mécaniques, d'autre part est de l'ordre de celle que l'on va inévitablement retrouver dans le métal suite à l'addition de Mn, lorsque celle-ci s'effectue sous la forme de silico-manganèse comme cela est classique (ce matériau étant moins cher et davantage disponible que le ferro-manganèse qui pourrait aussi être utilisable à cet effet). Une teneur d'environ 1% conduit à une tenue optimale à la corrosion sous contrainte dans l'eau, mais est peu efficace en milieu salin. Une teneur comprise entre 0,2 et 0,6% constitue le meilleur compromis entre les différentes exigences susceptibles de devoir être satisfaites par les produits en cours d'utilisation, notamment dans le domaine automobile. Au-delà de 1,1%, on risque de former de la martensite qui serait défavorable aux propriétés mécaniques recherchées.

Par ailleurs, l'expérience montre que la somme Al + Si doit être comprise entre 0,85 et 1,9%, de préférence entre 1,1 et 1,6%, pour que les effets recherchés sur la corrosion sous contrainte soient obtenus. L'explication de cette condition reste à trouver.

La teneur en Cu est comprise entre 1,2 et 1,9%. Habituellement on peut en ajouter des teneurs allant jusqu'à plusieurs % pour obtenir un durcissement par précipitation, au risque cependant de favoriser l'apparition de défauts de surface sur les produits laminés à chaud. Il s'avère qu'une teneur de 1,2 à 1,9%, conjuguée aux teneurs en Al et Si précitées dont il s'avère (surtout pour Si) qu'elles procurent un effet synergétique avec le Cu pour diminuer la corrosion sous contrainte des aciers Fe-C-Mn considérés, constitue la gamme optimale pour résoudre les problèmes techniques précités.

La présence de Cu permet aussi de conserver une limite élastique suffisamment basse pour procurer à l'acier un rapport Re/Rm bas, signe d'une grande aptitude à conserver une déformation, sans retour élastique. L'effet de durcissement par précipitation procuré habituellement par des teneurs très élevées en Cu n'est, ici, pas recherché.

Pour les autres éléments devant ou pouvant être présents dans l'acier, les exigences sont comparables aux exigences habituelles pour cette classe d'aciers.

La teneur en S est limitée à 0,030% au maximum pour éviter de fragiliser les joints de grains et, donc, de détériorer la ductilité.

La teneur en P est limitée à 0,080% pour la même raison.

La teneur en N est inférieure ou égale à 0,1%. La formation importante et incontrôlée de nitrures est, en effet, dommageable aux propriétés mécaniques recherchées.

A titre d'éléments optionnels, l'acier peut également renfermer les éléments suivants.

Il peut renfermer du Cr dont la teneur est limitée à 2% au maximum, de préférence à 1% au maximum. Cet élément peut augmenter la résistance à la corrosion en milieux aqueux, mais il tend aussi à réduire l'énergie de défaut d'empilement et en conséquence la stabilité de l'austénite sous déformation, donc la capacité de l'acier à être déformé.

Il peut renfermer du Ni dont la teneur est limitée à 2% au maximum. Lui aussi augmente la résistance à la corrosion en milieux aqueux. Il contribue aussi à obtenir un allongement à la rupture important et augmente la ténacité. Cependant, son ajout s'avère inutilement coûteux au-delà de 2%.

Il peut renfermer du Ti dont la teneur est limitée à 0,5% au maximum. Cet élément a une action durcissante par la précipitation de carbonitrures qu'il entraîne et qui piègent l'hydrogène, mais en quantité excessive ces carbonitrures vont réduire la ténacité, ce qui n'est pas souhaité. De préférence, Ti est présent à une teneur de 0,040 à 0,5%.

Du V peut être ajouté, jusqu'à 0,5% et, de préférence entre 0,05 et 0,5%, pour les mêmes raisons que Ti.

Du Nb peut être ajouté, jusqu'à 0,25%, de préférence entre 0,070 et 0,25%, pour les mêmes raisons que Ti.

De manière générale, la présence en quantité excessive d'éléments formant des nitrures (Ti, V, Nb) va conduire à la formation de nitrures grossiers qui ne pourront pas servir de pièges à hydrogène efficaces, ce qui réduira encore l'intérêt de telles additions.

Du B peut être ajouté, jusqu'à 0,010% et, de préférence, entre 0,0005 et 0,010%. Cet élément ségrège aux joints de grains et augmente leur cohésion. D'une manière surprenante, les inventeurs ont constaté qu'une addition de B dans cette gamme conduisait à une diminution de l'ordre de 2,5MPa par ppm sur la limite d'élasticité et sur la résistance. Sans vouloir être lié par une théorie, on pense que ceci conduit à une diminution des contraintes résiduelles après mise en forme par emboutissage, et à une meilleure tenue à la corrosion sous contrainte des pièces ainsi mises en forme.

Les autres éléments présents sont du fer et des impuretés résultant de l'élaboration, à leurs teneurs habituelles pour ce type d'aciers.

On a réalisé des essais de corrosion sous contrainte sur des godets de diverses compositions, conformes ou non à l'invention, décrites dans le tableau 1. Les godets ayant un facteur β de 1,67 ont été réalisés par la méthode décrite précédemment, à partir de tôles laminées à froid et recuites ayant subi un traitement conforme à celui décrit plus haut et d'épaisseur comprise entre 1,2 et 1,5mm. Les éprouvettes de fluage destinées à déterminer la résistance à la corrosion sous traction en eau salée ont été prélevées dans des tôles d'acier laminé à froid non recuites. Le corps de ces éprouvettes avait une largeur de 4mm et une longueur utile de 40mm. Les résultats des essais mécaniques et de corrosion sont résumés dans le tableau 2.

**Tableau 1 : Compositions des échantillons testés**

| Echantillon | C (%) | Mn (%) | Si (%) | Al (%) | Al+Si (%) | Cu (%) | V (%) | Nb (%) | Ni (%) | B (ppm) | P (%) | S (%) |
|---|---|---|---|---|---|---|---|---|---|---|---|---|
| 1 (ref.) | 0,6 | 22 | 0,2 | 0 | 0,2 | 0 | 0,2 | 0,002 | 0,07 | 10 | 0,03 | 0,0005 |
| 2 (ref.) | 0,9 | 17 | 0,5 | 0 | 0,5 | 0 | 0,3 | 0,003 | 0,18 | - | 0,03 | 0,0006 |
| 3 (ref.) | 0,6 | 18 | 0,2 | 0,1 | 0,3 | 0,5 | 0,001 | <0,001 | 0,005 | - | 0,033 | 0,012 |
| 4 (ref.) | 0,6 | 18 | 0,2 | 0,1 | 0,3 | 1,2 | <0,001 | 0,001 | 0,008 | 10 | 0,034 | 0,01 |
| 5 (ref.) | 0,9 | 17 | 0,5 | 0 | 0,5 | 1,2 | 0,29 | <0,001 | 0,005 | - | 0,03 | 0,015 |
| 6 (ref) | 0,65 | 18 | 0,2 | 0,5 | 0,7 | 1,2 | <0,001 | <0,001 | 0,01 | - | 0,031 | 0,013 |
| 7 (ref.) | 0,6 | 18 | 0,7 | 0 | 0,7 | 1,2 | 0,001 | 0,001 | 0,005 | 10 | 0,025 | 0,01 |
| 8 (ref.) | 0,56 | 18 | 0,2 | 1,4 | 1,6 | 0 | 0,06 | 0,003 | 0,003 | 20 | 0,024 | 0,0005 |
| 9 (ref.) | 0,6 | 18 | 1,1 | 0 | 1,1 | 1,7 | <0,001 | 0,001 | 0,005 | - | 0,026 | 0,01 |
| 10 (ref.) | 0,8 | 17 | 0,5 | 1,5 | 2 | 0 | 0,29 | <0,001 | 0,01 | - | 0,035 | 0,011 |
| 11 (inv.) | 0,65 | 18 | 0,2 | 0,9 | 1,1 | 1,2 | 0,001 | 0,001 | 0,008 | - | 0,03 | 0,01 |
| 12 (inv.) | 0,9 | 17 | 0,5 | 0,8 | 1,3 | 1,7 | 0,28 | 0,001 | 0,005 | 20 | 0,03 | 0,012 |
| 13 (inv.) | 0,6 | 18 | 0,6 | 0,25 | 0,85 | 1,2 | <0,001 | 0,001 | 0,008 | - | 0,03 | 0,012 |
| 14 (inv.) | 0,6 | 18 | 1,1 | 0,5 | 1,6 | 1,7 | <0,001 | 0,001 | 0,01 | 10 | 0,029 | 0,015 |
| 15 (inv.) | 0,65 | 18 | 0,2 | 0,9 | 1,1 | 1,7 | 0,001 | 0,001 | 0,005 | 10 | 0,03 | 0,01 |
| 16 (inv.) | 0,65 | 18 | 0,2 | 0,9 | 1,1 | 1,7 | 0,001 | 0,25 | 0,005 | - | 0,03 | 0,01 |
| 17 (inv.) | 0,6 | 18 | 0,6 | 0,25 | 0,85 | 1,7 | 0,001 | 0,002 | 0,006 | - | 0,029 | 0,011 |
| 18 (inv.) | 0,6 | 18 | 1,1 | 0,5 | 1,6 | 1,7 | 0,18 | 0,001 | 0,01 | 20 | 0,029 | 0,013 |

**Tableau 2 : Résultats des essais de corrosion et des essais mécaniques**

| Echantillon | A Corrosion godet eau du robinet (jours) | B Corrosion godet brouillard salin (jours) | C Corrosion éprouvette sous traction en eau salée (jours) | Re (MPa) | Rm (MPa) | A% | Σ = A + 3B + 4C |
|---|---|---|---|---|---|---|---|
| 1 (ref.) | 6 | 2 | 1,5 | 570 | 1150 | > 50 | 18 |
| 2 (ref.) | 16 | 3 | 1,7 | 695 | 1306 | 38 | 32 |
| 3 (ref.) | 14 | 12 | 5,5 | 518 | 1089 | 60 | 72 |
| 4 (ref.) | 35 | 14 | 5,4 | 500 | 1045 | 62 | 98,6 |
| 5 (ref.) | 52 | 13 | 7,1 | 672 | 1257 | 50 | 119,4 |
| 6 (ref) | 58 | 13 | 6,8 | 474 | 989 | 69 | 124,2 |
| 7 (ref.) | 73 | 13 | 8 | 478 | 1056 | 74 | 144,12 |
| 8 (ref.) | 100 | 14 | 2,8 | 514 | 969 | 59 | 153,2 |
| 9 (ref.) | 73 | 16 | 10,6 | 495 | 1042 | 67 | 163,4 |
| 10 (ref.) | 103 | 17 | 3,9 | 712 | 1154 | 54 | 169,6 |
| 11 (inv.) | 105 | 13 | 6,8 | 478 | 949 | 67 | 171,2 |
| 12 (inv.) | 109 | 16 | 4,5 | 678 | 1133 | 58 | 175 |
| 13 (inv.) | 94 | 20 | 6,8 | 488 | 1013 | 60 | 181,2 |
| 14 (inv.) | 163 | 20 | 4,6 | 508 | 986 | 59 | 241,4 |
| 15 (inv.) | 133 | 35 | 11,1 | 476 | 913 | 64 | 282,4 |
| 16 (inv.) | 227 | 13 | 4,6 | 532 | 942 | 59 | 284,4 |
| 17 (inv.) | 150 | 36 | 8,5 | 477 | 971 | 63 | 292 |
| 18 (inv.) | 294 | 20 | 6,2 | 584 | 1028 | 57 | 378,8 |

L'analyse de ces résultats montre que ce n'est qu'en respectant toutes les conditions posées sur les teneurs en Si, Al et Cu que l'on obtient à la fois les bons résultats recherchés en corrosion sous contrainte, particulièrement dans les conditions les plus sévères que sont le brouillard salin et l'eau salée, et les propriétés mécaniques rendant les aciers de l'invention adaptés à leur utilisation notamment dans l'industrie automobile.

Parmi les échantillons de référence, l'échantillon 10 a une tenue à la corrosion en eau salée inférieure à la valeur minimale exigée de 4 jours. De plus, sa valeur du critère Σ = A + 3xB + 4xC, caractérisant la tenue globale à la corrosion sous contrainte, est inférieure à 170 jours.

De manière générale, ces essais montrent bien que le respect simultané des quatre conditions :
- 0,2% ≤ Al ≤ 0,9% ;
- 0,2% ≤ Si ≤ 1,1% ;
- 0,85% ≤ Al + Si ≤ 1,9%, de préférence 1,1% ≤ Al + Si ≤ 1,6% ;
- 1,2% ≤ Cu ≤1,9% ;
est nécessaire pour que tous les objectifs de l'invention soit atteints, car on bénéficie d'un effet de synergie entre Al et Si d'une part et entre Al et Cu d'autre part sur la résistance à la corrosion sous contrainte.

## Revendications

1. Tôle d'acier laminée à chaud ou à froid, **caractérisée en ce que** sa composition est, en pourcentages pondéraux :
- 0,6% ≤ C ≤ 0,9% ;
- 17% ≤ Mn ≤ 22% ;
- 0,2% ≤ Al ≤ 0,9% ;
- 0,2 % ≤ Si ≤ 1,1% ;
- avec 0,85% ≤ AI + Si ≤ 1,9% ;
- 1,2% ≤ Cu ≤ 1,9% ;
- S ≤ 0,030% ;
- P ≤ 0,080% ;
- N ≤ 0,1% ;
optionnellement
- Nb ≤ 0,25% et, de préférence, compris entre 0,070 et 0,25% ;
- V ≤ 0,5% et, de préférence, compris entre 0,050 et 0,5% ;
- Ti ≤ 0,5%, et, de préférence, compris entre 0,040 et 0,5% ;
- Ni ≤ 2% ;
- traces ≤ Cr ≤ 2%, de préférence ≤ 1% ;
- B ≤ 0,010%, et, de préférence, compris entre 0,0005% et 0,010% ;
le reste étant du fer et des impuretés résultant de l'élaboration.

2. Tôle selon la revendication 1, **caractérisée en ce que** 0,4% ≤ Al ≤ 0,8%.

3. Tôle selon la revendication 1 ou 2, **caractérisée en ce que** 0,2% ≤ Si ≤ 0,6%.

4. Tôle selon l'une des revendications 1 à 3, **caractérisée en ce que** 17% ≤ Mn ≤ 18%.

5. Tôle selon l'une des revendications 1 à 4, caractérisée en ce la taille moyenne de ses grains est inférieure ou égale à 5 µm.

6. Tôle selon l'une des revendications 1 à 5, **caractérisée en ce que** la fraction surfacique de ses carbures précipités est inférieure ou égale à 1,5%.

7. Tôle selon l'une des revendications 1 à 6, **caractérisée en ce qu'**elle comporte un revêtement de Zn ou d'alliage de Zn obtenu par électrozingage.

8. Procédé de fabrication d'une tôle d'acier, **caractérisé en ce que** :
- on élabore et coule sous forme d'une brame un demi-produit en un acier ayant la composition selon l'une des revendications 1 à 4 ;
- puis on porte ledit demi-produit à une température de 1100 à 1300°C;
- puis on réalise un laminage à chaud dudit demi-produit pour obtenir une tôle laminée à chaud, la température dudit demi-produit en fin de laminage étant d'au moins 890°C ;
- puis on réalise un refroidissement rapide dudit demi-produit laminé à chaud, à une vitesse d'au moins 40°C/s, en observant un déla i entre la fin du laminage et le début du refroidissement tel que le point défini par ledit délai et ladite température de fin de laminage se trouve situé au sein d'une aire définie par le diagramme ABCD'E'F'A, et préférentiellement ABCDEFA, tel que montrée par la figure 1, le métal subissant un refroidissement naturel à l'air libre pendant ledit délai ;
- puis on bobine ladite tôle laminée à chaud à une température inférieure ou égale à 580°C.

9. Procédé de fabrication d'une tôle d'acier selon la revendication 8, **caractérisé en ce qu'**on débobine ladite tôle laminée à chaud bobinée, et **en ce qu'**on lui applique au moins un cycle de laminage à froid/recuit pour obtenir une tôle laminée à froid.

10. Procédé selon la revendication 9, **caractérisé en ce qu'**après le ou lesdits cycle(s) de laminage à froid/recuit, on applique à ladite tôle laminée à froid une déformation à froid à un taux de réduction inférieur ou égal à 30%.

11. Procédé selon la revendication 10, **caractérisée en ce que** ladite déformation à froid est réalisée par un procédé choisi parmi un laminage écrouissant, un planage sous traction en flexion alternée et un étirage simple.

12. Utilisation dans l'industrie automobile d'une tôle laminée à chaud ou à froid selon l'une quelconque des revendications 1 à 7.

13. Utilisation selon la revendication 12, **caractérisée en ce que** ladite tôle est utilisée dans des conditions susceptibles d'entraîner une corrosion sous contrainte.

## Patentansprüche

1. Warm- oder kaltgewalztes Stahlblech,
**dadurch gekennzeichnet,**
**dass** seine Zusammensetzung folgende Komponenten in Gew.-% enthält:
0,6 % ≤ C ≤ 0,9 %
17 % ≤ Mn ≤ 22 %
0,2 % ≤ Al ≤ 0,9 %
0,2 % ≤ Si ≤ 1,1 %
mit 0,85 % ≤ Al + Si ≤ 1,9 %
1,2 % ≤ Cu ≤ 1,9 %
S ≤ 0,030 %
P ≤ 0,080 %
N ≤ 0,1 %,
optional
Nb ≤ 0,25 % und vorzugsweise zwischen 0,070 und 0,25 %
V ≤ 0,5 % und vorzugsweise zwischen 0,050 und 0,5 %
Ti ≤ 0,5 % und vorzugsweise zwischen 0,040 und 0,5 %
Ni ≤ 2 %
Spuren ≤ Cr ≤ 2 %, vorzugsweise ≤ 1 %
B ≤ 0,010 % und vorzugsweise zwischen 0,0005 % und 0,010 % , wobei der Rest Eisen und Verunreinigungen sind, die sich aus der Herstellung ergeben.

2. Blech nach Anspruch 1,
**dadurch gekennzeichnet,**
**dass** 0,4 % ≤ A1 ≤ 0,8 %.

3. Blech nach Anspruch 1 oder 2,
**dadurch gekennzeichnet,**
**dass** 0,2 % ≤ Si ≤ 0,6 %.

4. Blech nach einem der Ansprüche 1 bis 3,
**dadurch gekennzeichnet,**
**dass** 17 % ≤ Mn ≤ 18%.

5. Blech nach einem der Ansprüche 1 bis 4,
**dadurch gekennzeichnet,**
**dass** seine durchschnittliche Korngröße kleiner oder gleich 5 µm ist.

6. Blech nach einem der Ansprüche 1 bis 5,
**dadurch gekennzeichnet,**
**dass** sein Flächenanteil an ausgefällten Karbiden kleiner oder gleich 1,5 % ist.

7. Blech nach einem der Ansprüche 1 bis 6,
**dadurch gekennzeichnet,**
**dass** es eine Beschichtung aus Zn oder einer Zn-Legierung aufweist, die durch Elektroverzinkung erhalten wird.

8. Verfahren zum Herstellen eine Stahlblechs,
**dadurch gekennzeichnet, dass**
- ein Halbzeug aus einem Stahl mit einer Zusammensetzung nach einem der Ansprüche 1 bis 4 hergestellt und in Form einer Bramme gegossen wird;
- danach das Halbzeug auf eine Temperatur von 1100 °C bis 1300 °C gebracht wird;
- danach ein Warmwalzen des Halbzeugs erfolgt, um ein warmgewalztes Blech zu erhalten, wobei die Temperatur des Halbzeugs am Ende des Walzvorgangs mindestens 890 °C beträgt;
- danach ein schnelles Abkühlen des warmgewalzten Halbzeugs mit einer Geschwindigkeit von mindestens 40 °C/s erfolgt, wobei ein Zeitraum zwischen dem Ende des Walzvorgangs und dem Beginn des Abkühlvorgangs so eingehalten wird, dass der von dem Zeitraum und der Temperatur am Ende des Walzvorgangs bestimmte Punkt innerhalb eines Bereichs liegt, der von einem Diagramm ABCD'E'F'A definiert wird, vorzugsweise von einem Diagramm ABCDEFA, wie es in Figur 1 gezeigt ist, wobei das Metall während des genannten Zeitraums eine natürliche Abkühlung an der Freiluft erfährt;
- danach das warmgewalzte Blech bei einer Temperatur von weniger als oder gleich 580 °C aufgewickelt wird.

9. Verfahren zum Herstellen eines Stahlblechs nach Anspruch 8,
**dadurch gekennzeichnet,**
**dass** das aufgewickelte, warmgewalzte Blech abgewickelt wird und dass es zumindest einem Kaltwalz-/Anlasszyklus unterzogen wird, um ein kaltgewalztes Blech zu erhalten.

10. Verfahren nach Anspruch 9,
**dadurch gekennzeichnet,**
**dass** nach dem bzw. den Kaltwalz-/Anlasszyklus bzw. -zyklen das kaltgewalzte Blech einer Kaltverformung mit einem Umformgrad kleiner oder gleich 30 % unterzogen wird.

11. Verfahren nach Anspruch 10,
**dadurch gekennzeichnet,**
**dass** die Kaltverformung mit einem Verfahren erfolgt, das ausgewählt ist aus einem kaltumformenden Walzen, einem Richten unter Zug mit Wechselbiegung und einem einfachen Strecken.

12. Verwendung von einem warm- bzw. kaltgewalzten Blech nach einem der Ansprüche 1 bis 7 in der Automobilindustrie.

13. Verwendung nach Anspruch 12,
**dadurch gekennzeichnet,**
**dass** das Blech unter Bedingungen eingesetzt wird, die eine Spannungskorrosion bewirken können.

## Claims

1. A hot-rolled or cold-rolled steel plate, **characterized in that** its composition is in weight percentages:
- 0.6% ≤ C ≤ 0.9%;
- 17% ≤ Mn ≤ 22%;
- 0.2% ≤ Al ≤ 0.9%;
- 0.2 % ≤ Si ≤ 1.1%;
- with 0.85% ≤ Al + Si ≤ 1.9%;
- 1.2% ≤ Cu ≤1.9%;
- S ≤ 0.030%;
- P ≤ 0.080%;
- N ≤ 0.1%;
optionally
- Nb ≤ 0.25% and preferably comprised between 0.070 and 0.25%;
- V ≤ 0.5% and preferably comprised between 0.050 and 0.5%;
- Ti ≤ 0.5%, and preferably comprised between 0.040 and 0.5%;
- Ni ≤ 2%;
- trace amounts ≤ Cr ≤ 2%, preferably ≤ 1%;
- B ≤ 0.010%, and preferably comprised between 0.0005% and 010%;
the remainder being iron and impurities resulting from the production.

2. The plate according to claim 1, **characterized in that** 0.4% ≤ Al ≤ 0.8%.

3. The plate according to claim 1 or 2, **characterized in that** 0.2% ≤ Si ≤ 0.6%.

4. The plate according to one of claims 1 to 3, **characterized in that** 17% ≤ Mn ≤ 18%.

5. The plate according to one of claims 1 to 4, **characterized in that** the average size of its grains is less than or equal to 5 µm.

6. The plate according to one of claims 1 to 5, **characterized in that** the surface fraction of its precipitated carbides is less than or equal to 1.5%.

7. The plate according to one of claims 1 to 6, **characterized in that** it includes a Zn or Zn alloy coating obtained by electro-galvanization.

8. A method for manufacturing a steel plate, **characterized in that**:
- a semi-finished product in a steel having the composition according to one of claims 1 to 4 is elaborated and cast as a slab;
- said semi-finished product is then brought to a temperature from 1,100 to 1,300°C;
- hot-rolling of said semi-finished product is then achieved in order to obtain a hot-rolled plate, the temperature of said semi-finished product at the end of rolling being of at least 890°C;
- fast quenching of said hot-rolled semi-finished product is then carried out at a rate of at least 40°C/s, while observing a delay between the end of the rolling and the beginning of the quenching such that the point defined by said delay and said temperature at the end of rolling is located within an area defined by the ABCD'E'F'A, preferentially ABCDEFA, diagram, as shown by Fig. 1, the metal being subject to natural cooling in the open air during said delay;
- said hot-rolled plate is wound at a temperature of less than or equal to 580°C.

9. The method for manufacturing a steel plate according to claim 8, **characterized in that** said wound hot-rolled plate is unwound, and **in that** at least one cold-rolling/annealing cycle is applied to it in order to obtain a cold-rolled plate.

10. The method according to claim 9, **characterized in that** after said cold-rolling/annealing cycle(s), cold deformation at a reduction level of less than or equal to 30% is applied to said cold-rolled plate.

11. The method according to claim 10, **characterized in that** said cold deformation is achieved with a method selected from work-hardening rolling, leveling under traction with alternating flexure and simple drawing.

12. The use in the automotive industry of a hot-rolled or cold-rolled plate according to any of claims 1 to 7.

13. The use according to claim 12, **characterized in that** said plate is used under conditions which may cause corrosion under stress.
